Europäisches Patentamt

European Patent Office

Office européen des brevets

(19)

(11) EP 0 353 717 B1

(12) EUROPEAN PATENT SPECIFICATION

(45) Date of publication and mention
of the grant of the patent:
**15.10.1997 Bulletin 1997/42**

(51) Int Cl.$^6$: **C08G 75/02**

(21) Application number: **89114210.1**

(22) Date of filing: **01.08.1989**

(54) **Process for preparing Polyarylene sulfides**

Verfahren zur Herstellung von Polyarylensulfiden

Procédé pour préparer des sulfures de polyarylène

(84) Designated Contracting States:
**BE CH DE FR GB IT LI NL SE**

(30) Priority: **05.08.1988 JP 195845/88**
**08.05.1989 JP 114675/89**

(43) Date of publication of application:
**07.02.1990 Bulletin 1990/06**

(73) Proprietor: **IDEMITSU PETROCHEMICAL CO.,**
**LTD.**
**Minato-ku, Tokyo (JP)**

(72) Inventors:
 • **Kosaka, Wataru**
 **Idemitsu Petrochemical Co., Ltd.**
 **Chiba-ken (JP)**
 • **Senga, Minoru Idemitsu Petrochemical Co., Ltd.**
 **Chiba-ken (JP)**
 • **Ogata, Norio Idemitsu Petrochemical Co., Ltd.**
 **Kimitsu-gun Chiba-ken (JP)**
 • **Housaki, Tatsuya**
 **Idemitsu Petrochemical Co., Ltd.**
 **Chiba-ken (JP)**

(74) Representative:
**TER MEER STEINMEISTER & PARTNER GbR**
**Mauerkircherstrasse 45**
**81679 München (DE)**

(56) References cited:
**EP-A- 0 075 769**      **EP-A- 0 100 551**
**EP-A- 0 126 369**      **EP-A- 0 302 218**
**FR-A- 2 312 524**      **FR-A- 2 388 846**
**GB-A- 1 056 226**      **US-A- 4 071 509**

Remarks:
The file contains technical information submitted
after the application was filed and not included in this
specification

## Description

The present invention relates to a polyarylene sulfide, a process for preparing the polyarylene sulfide and a resin composition containing the polyarylene sulfide.

The polyarylene sulfide is high in non-Newtonian behavior and high-degree of branching, not too high in an average molecular weight in spite of a high degree of branching and broad in a molecular weight distribution. The polyarylene sulfide has further excellent moldability, flowability and thermal stability, is so colorless that it has a high degree of whiteness, and is very small molding flash(burr) in injection molding. Furthermore, it is readily prepared as a resin stable in its characteristic properties by controlling its polymerization system. The polyarylene sulfide thus prepared can provide a resin composition with improved properties including the mechanical strength, thermal resistance, long-term stability and chemical resistance.

Polyarylene sulfides such as polyphenylene sulfide are resins which are thermoplastic yet partially thermosetting, and they are generally excellent in resistance to heat and chemicals and in dimensional stability so that they extensively lend themselves to molding materials as engineering plastics, for example, for electric and electronic parts, injection-molded articles for precision parts, films, and so on.

It is known that polyarylene sulfides prepared by conventional processes are of a thermally cross-linked type and of a linear high-molecular-weight type.

The polyarylene sulfides of the thermally cross-linked type present various disadvantages. A dark color is imparted to the polyarylene sulfide as well as ultra-high-molecular-weight component is contained as a polymer powder is heated in the presence of oxygen in order to render a molecular weight of the polyarylene sulfide higher. The polyarylene sulfide is colored in dark brown so that a degree of whiteness is very low, as well as it is very brittle because of foaming due to thermal decomposition, an excessive degree of branching and cross-linking, and non-uniformity. The resin cannot be used singly, and a color matching is difficult due to its dark color. For these reasons, the use of the polyarylene sulfide is limited to a relatively narrow field.

The polyarylene sulfides of the linear high-molecular-weight type are superior in terms of the mechanical strength, particularly properties associated with toughness, to those of the thermally cross-linked type, however, they are slow in crystallization as well as low in melt elasticity(melt tension). The polyarylene sulfides of this type are further poor in productivity because molding flash are likely to occur upon injection molding.

In order to solve the problems encountered with the thermally cross-linked type and with the linear high-molecular-weight type in a complementary manner, it is required to attain appropriate branching and cross-linking degree as well as to optimize a molecular weight and a distribution of molecular weights.

It is known as a means for enlarging a molecular weight that a water content in a reaction mixture to be used for polymerization is adjusted by subjecting a hydrous alkali metal sulfide to dehydration prior to polymerization. However, it is to be noted that this procedure is not sufficient enough to enlarge a molecular weight of a resulting polymer. Thus, for example, U. S. Patent No. 4,038,261 ($\triangleq$ FR-A-2 312 524) and EP-75769 and EP-A-126 369 discloses a process in which a branching agent is added to enlarge a molecular weight of the resulting polymer. This process can produce a polyarylene sulfide such as polyphenylene sulfide having a sufficiently enlarged molecular weight with a relatively readiness, yet its melt flowability is reduced due to polymerization. It is thus to be considered to raise the melt flowability by elevating a molding temperature, however, an elevated molding temperature may cause a decomposition of the polymer so that a injection pressure upon injection molding should be elevated. As a result, molding flash are likely to occur on molded articles and items.

Japanese Patent Publication (laid-open) No.223,753/1984 discloses a composition obtainable by blending a polyarylene sulfide of a linear high-molecular-weight type with a polyarylene sulfide of a thermally cross-linked type. This composition poses the problems that it is poor in thermal stability and low in a degree of whiteness.

Furthermore, Japanese Patent Publication (laid-open) No. 240,359/1987 discloses a composition consisting of a blend of a linear high-molecular-weight polyarylene sulfide with a linear low-molecular-weight polyarylene sulfide. This composition develops crystallization to a somewhat extent, however, its melt elasticity is rather reduced incurring the risk of mold flashing upon molding.

Demands have accordingly been made to provide a polyarylene sulfide that attains appropriate branching and cross-linking degrees, optimizes its molecular weight and a distribution of its molecular weights, and furthermore solve the problems encountered with the conventional thermally cross-linked and linear high-molecular-weight polyarylene sulfides.

Therefore, the present invention has the object to provide a process for preparing a polyarylene sulfide which is high in a non-Newtonian behavior, high melt elasticity(melt tension), and not too high in an average molecular weight in spite of the high degree of branching, as well as broad in a distribution of molecular weight, thereby reducing occurrence of molding flash to a remarkably large extent. The polyarylene sulfide has excellent moldability, fluidity, and thermal stability, and contains a very small amount of impurities, imparting a color to a very low extent and having a high degree of whiteness, thereby permitting a ready color matching.

In order to achieve the object, the present invention provides a process according to claim 1.

FIG. 1 is a graph showing the gel permeation chromatogram (GPC) indicating a distribution of the molecular weight of a polyphenylene sulfide prepared in Example 1.

FIG. 2 is a graph showing the gel permeation chromatogram (GPC) indicating a distribution of the molecular weight of a polyphenylene sulfide prepared in Example 5.

FIG. 3 is a graph showing the gel permeation chromatogram (GPC) indicating a distribution of the molecular weight of a polyphenylene sulfide prepared in Comparative Example 4.

FIG. 4 is a graph showing the gel permeation chromatogram (GPC) indicating a distribution of the molecular weight of a polyphenylene sulfide prepared in Comparative Example 5.

The process for preparing the polyarylene sulfide will be described in detail.

Polyarylene sulfides

The polyarylene sulfide prepared according to the present invention has an inherent viscosity $[\eta_{inh}]$, a weight-average molecular weight, a ratio of the inherent viscosity $[\eta_{inh}]$ to a calculated viscosity $[\eta]_{calc}$, $([\eta_{inh}]/[\eta]_{calc})$, and a degree of whiteness within particular ranges.

The inherent viscosity $[\eta_{inh}]$ is in the range generally from 0.1 to 0.5 dl/g, preferably from 0.2 to 0.4 dl/g. If the inherent viscosity is below the lower limit, the mechanical strength of the polyarylene sulfide is low and its moldability becomes bad because molding flash are likely to occur upon injection molding. If the inherent viscosity exceeds the upper limit, the viscosity at the time of melting becomes too high so that the heating at high temperatures and injectioning at high presure is required upon injection molding, thereby decomposing the resin and causing molding flash.

The weight-average molecular weight is in the range generally from $1 \times 10^4$ to $2 \times 10^5$, preferably from $2 \times 10^4$ to $1.5 \times 10^5$, when measured by means of a gel permeation chromatography (GPC). If the weight-average molecular weight becomes below the lower limit, the mechanical strength such as impact strength, long-term stability and chemical resistance are reduced remarkably. If the weight-average molecular weight exceeds the upper limit, the viscosity becomes too high so that the moldability of the polyarylene sulfide becomes so poor to give molded products with favorable properties.

The ratio of the inherent viscosity $[\eta_{inh}]$ to the calculated viscosity $[\eta]_{calc}$ (degree of branching parameter (BI): $[\eta_{inh}]/[\eta]_{calc}$) is in the range of 0.4/1 to 0.8/1, preferably from 0.5/1 to 0.8/1. If the ratio of the inherent viscosity to the calculated viscosity is below the lower limit, the degree of crosslinking becomes too high that the resin becomes too brittle as well as the viscosity becomes too high, thus making the moldability poor. Furthermore, the polyarylene sulfide may gel upon polymerization, thereby making a stable manufacture difficult. If the ratio exceeds the upper limit, the non-Newtonian behavior becomes too small to effectively prevent an occurrence of molding flash upon injection molding.

The weight-average molecular weight may be obtained by means of the gel permeation chromatography (GPC). The calculated viscosity $[\eta]_{calc}$ is:

$$[\eta]_{calc} = 8.91 \times 10^{-5} \cdot M^{0.747}$$

in a linear or long-chain branched group, or it can be calibrated in a group with a distribution using the following formula:

$$[\eta]_{calc} = \frac{\Sigma\, 8.91 \times 10^{-5} \cdot C_i \cdot M_i^{0.747}}{\Sigma\, C_i}$$

The source : Journal of Applied Polymer Science Vol.32, 3959~ 3968(1986)

where Ci is a concentration of a component having a molecular weight Mi).

The degree of whiteness is in the range from 50 or higher, preferably from 60 or higher, when measured in accordance with whiteness testing procedures (JIS P8123).

A distribution of the molecular weight of the polyarylene sulfide is such that components having molecular weights of $2 \times 10^5$ and higher account generally for 3% by weight or higher, preferably for 4% by weight or higher, with respect to the total weight of the polyarylene sulfide and that components having molecular weights of $2 \times 10^3$ and lower account for 20% by weight or lower, preferably for 16% by weight or lower, with respect to all the components. The molecular weight distribution within the appropriate range serves as improvements particularly in moldability, for example, by reducing occurrence of molding flash upon injection molding, whereby the polyarylene sulfides can be formed into sheets and films having a uniform thickness and fibers without end breakages.

It is further preferred that the polyarylene sulfides according to the present invention has a fluidity parameter (EI) of 1.2 or higher, when measured by the following relationship:

$$EI = G'_{obs}/G'_1$$

where G'obs and $G'_1$ each is a storage modulus at an angular velocity $\omega = 1$ (rad/second) by means of Sinusoidal Oscillation Method at 300 °C using a cone and plate rheometer, and $G'_1$ is a value of a linear polyarylene sulfide having the same inherent viscosity [$\eta_{inh}$] as the specimen.

If the fluidity parameter becomes below the lower limit, a melt eleasicity becomes too high and occurrence of molding flash cannot be effectively prevented upon injection molding.

Preparation of Polyarylene Sulfide

The polyarylene sulfides prepared according to the present invention having the properties as have been described hereinabove are prepared by contacting at least one member of the metallic sulfide (A) selected from the alkali metal sulfide and the alkali metal hydrosulfide with the dihalogen aromatic compound (B) and the aromatic compound (C) with three or more than three functional groups, wherein a molar ratio of the dihalogen aromatic compound (B) to the metal sulfide (A), [(B)/(A)], is arranged within the range from 1.05/1 to 1.300/1, and a molar ratio of the aromatic compound (C) to the dihalogen aromatic compound (B), [(C)/(B)], is arranged within the range from 0.0076/1 to 0.05/1, in the presence of a polymerization aid as indicated in claim 1.

The metallic sulfide (A) is selected from the alkali metal sulfide and the alkali metal hydrosulfide.

The alkali metal sulfide may include, for example, lithium sulfide, sodium sulfide, potassium sulfide, rubidium sulfide and cesium sulfide. Sodium sulfide and lithium sulfide are preferred, and sodium sulfide is more preferred. The alkali metal sulfide may be used singly or in combination thereof.

The alkali metal hydrosulfide may include, for example, lithium hydrosulfide, sodium hydrosulfide, potassium hydrosulfide, rubidium hydrosulfide, calcium hydosulfide, and cesium hydrosulfide. Sodium hydrosulfide and lithium hydrosulfide are preferred, and sodium hydrosulfide is more preferred. The alkali metal hydrosulfide may be used singly or in combination thereof.

The alkali metal sulfide and hydrosulfide may be in the form of an anhydride as well as commercially available or industrial grade hydrate and an aqueous mixture. It is to be noted, however, that the hydrate and the aqueous mixture may be dehydrated prior to polycondensation because a large quantity of water is contained in the polymerization system if they are used as they are.

When the alkali metal hydrosulfide is employed, it is preferred to use a base. The base may be any acid receptor which can convert the alkali metal hydrosulfide into the alkali metal sulfide or effectively neutralize or receive a hydrogen halide producible by condensation of the alkali metal hydrosulfide with the dihalogen aromatic compound and which does not adversely affect the object of the present invention. The base may be of an inorganic type and of an organic type. The inorganic salt may preferably include, for example, an alkali metal hydroxide or the like, such as lithium hydroxide, sodium hydroxide, potassium hydroxide, rubidium hydroxide, and cesium hydroxide. Lithium hydroxide and sodium hydroxide are preferred, and sodium hydroxide is more preferred. The base may be used usually at least in an amount of an equimolar equivalent at the maximum per equivalent (mole) of the alkali metal hydrosulfide The base may be used singly or in combination thereof.

The dihalogen aromatic compound (B) to be used for the process according to the present invention may be any conventional one and may include, for example, a dihalogen compound such as m-dihalobenzene and p-dihalobenzene; an alkyl-substituted dihalobenzene such as 2,3-dihalotoluene, 2,5-dihalotoluene, 2,6-dihalotoluene, 3,4-dihalotoluene, 2,5-dihaloxylene, 1-ethyl-2,5-dihalobenzene, 1,2,4,5-tetramethyl-3,6-dihalobenzene and 1-n-hexyl-2,5-dihalobenzene; a cycloalkyl-substituted dihalobenzene such as 1-cyclohexyl-2,5-dihalobenzene; an aryl-substituted dihalobenzene such as 1-phenyl-2,5-dihalobenzene, 1-benzyl- 2,5-dihalobenzene and 1-p-toluyl-2,5-dihalobenzene; a dihalobiphenyl such as 4,4'-dihalobiphenyl; and a dihalonaphthalene such as 1,4-dihalonaphthalene, 1,6-dihalonaphthalene, and 2,6-dihalonaphthalene. The two halogen atoms in the dihalogen aromatic cmpounds (B) may be the same or different from each other and may be those replaced, for example, by fluorine, chlorine, bromine or iodine. Dihalobenzenes are preferred, and p-dichlorobenzene and p-dichlorobenzene containing 20 mol% or lower of m-dichlorobenzene are particularly preferred.

As the component (C) to be used for the process according to the present invention is the aromatic compound having three or more than three functionsl groups, preferably three or four, more preferably three functional groups. The aromatic compound may include, for example, an active hydrogen-containing halogen aromatic compound, a polyhalogen aromatic compound, and a halogen aromatic nitro compound. Preferred is the halogen aromatic nitro compound.

The aromatic moiety of the aromatic compound (C), on the one hand, may include, for example, a benzene, biphenyl, diphenyl ether, diphenyl sulfide, or naphthalene. Benzenes are preferred. On the other hand, the functional groups may include, for example, an active hydrogen containing group such as amino, hydroxyl, mercapto, carboxyl, sulfonyl, sulfino, sulfamoyl, hydrazino and carbamoyl groups, a halogen atom as well as a nitro group. Preferred are the halogen atom, as well as the halogen atom and the amino group or nitro group. The halogen atom may include chlorine atom, fluorine atom, bromine atom and iodine atom. Chlorine is particularly preferred. The functional groups to be connected to the aromatic ring or rings may be the same as or different from each other.

As the active hydrogen-containing halogen aromatic compound is employed a halogen aromatic compound with an active hydrogen-containing group or groups, such as an amino group, mercapto group, hydroxyl group or the like. More specifically, the active hydrogen-containing halogen aromatic compound may include, for example, a dihaloaniline such as 2,6-dichloroaniline, 2,5-dichloroaniline, 2,4-dichloroaniline and 2,3-dichloroaniline, a trihaloaniline such as 2,3,4-trichloroaniline, 2,3,5-trichloroaniline, 2,4,6-trichloroaniline and 3,4,5-trichloroaniline, an amino-containing halogen aromatic compound including a dihaloaminodiphenyl ether such as 2,2'-diamino-4,4'-dichlorodiphenyl ether and 2,4'-diamino-2',4-dichlorodiphenyl ether, and those in which the amino group is replaced by the other functional group such as the thiol group or the hydroxyl group.

There may also be used an active hydrogen-containing halogen aromatic compound such as an amino-containing halogen aromatic compound, in which a hydrogen atom or atoms joined to the carbon atom or atoms forming its aromatic ring is or are replaced by another inert group or groups such as a carbohydryl group, i.e., an alkyl group.

Among the active hydrogen-containing halogen aromatic compounds, the active hydrogen-containing dihalogen aromatic compound is preferred. Dichloroaniline is more preferred.

The polyhalogen aromatic compound may include, for example, a trihalobenzene such as 1,2,4-trichlorobenzene and 1,3,5-trichlorobenzene and a trihalonaphthalene such as 1,4,6-trichloronaphthalene. Particularly, 1,2,4-trichlorobenzene and 1,3,5-trichlorobenzene are preferred.

The halogen aromatic nitro compound may include, for example, a mono- or di-halonitrobenzene such as 2,4-dinitrochlorobenzene or 2,5-dichloronitrobenzene, a dihalonitrodiphenyl ether such as 2-nitro-4,4'-dichlorodichlorodiphenyl ether, a dihalonitrodiphenyl sulfone such as 3,3'-dinitro-4,4'-dichlorodiphenyl sulfone, a mono- or di-halonitropyridine such as 2,5-dichloro-3-nitropyridine or 2-chloro-3,5-dinitro-pyridine, or a dihalonitronaphthalene.

The aromatic compound (C) may be used singly or in combination thereof.

The molar ratio of the dihalogen aromatic compound (B) to the metallic sulfide (A) ranges from 1.05/1 to 1.300/1 (B/A), preferably to 1.15/1, and the molar ratio of the aromatic compound (C) having three or more than three functional groups to the dihalogen aromatic compound (B) ranges from 0.0076/1 to 0.05/1 (C/B), preferably to 0.02/1. If the molar ratio is beyond the limits, no polyarylene sulfide having a sufficiently high molecular weight can be produced or a melt flowability of the polyarylene sulfide cannot be attained although a sufficiently high molecular weight is achieved, thereby impairing its moldability, particularly at the time of injection molding. If the moldability at the time of injection molding is insufficient, a molding pressure is required to be elevated and molding flash are likely to occur upon injection molding. If the ratio (B/A) is 1.2/1 or higher and the ratio (C/B) is 0.05/1 or higher, it is possible to decrease molding flash from occurring, however, the polymer becomes too brittle and too small in yield to be applicable on an industrial scale. As the case may be, the polymer is apt to be colored so that it cannot achieve the object of the present invention.

The polymerization of the dihalogen aromatic compound (B) and the aromatic coumpound (C) having three or more than three functional groups may be carried out in the presence of an appropriate amount of water as is conventionally carried out.

As the organic polar solvent to be used may be used an amide compound, a lactam compound, a urea compound, and a cyclic organophosphorus compound. Among the organic polar solvent, the aprotic organic amide compound and lactam compound are conveniently used. The solvent may be used singly or in combination thereof.

The amide compound may include, for example, a formamide such as N,N-dimethylformamide, an acetamide such as N,N-dimethylacetamide, N,N-diethylacetamide and N,N-dipropylacetamide, and an amide such as N,N-dimethylbenzamide, and the like.

The lactam compound may include, for example, a caprolactam such as caprolactam, N-methylcaprolactam, N-ethylcaprolactam, N-n-propylcaprolactam, N-isopropylcaprolactam, N-n-butylcaprolactam, N-isobutylcaprolactam and N-cylcohexylcaprolactam, a pyrrolidone such as N-methyl-2-pyrrolidone, N-ethyl-2-pyrrolidone, N-n-propyl-2-pyrrolidone, N-isopropyl-2-pyrrolidone, N-n-butyl-2-pyrrolidone, N-isobutyl-2-pyrrolidone, N-cyclohexyl-2-pyrrolidone, N-methyl-3-methyl-2-pyrrolidone, N-ethyl-3-methyl-2-pyrrolidone and N-methyl-3,4,5-trimethyl-2-pyrrolidone, a piperidone such as N-methyl-2-piperidone, N-ethyl-2-piperidone, N-propyl-2-piperidone, N-isopropyl-2-piperidone, N-methyl-6-methyl-2-piperidone, N-methyl-3-ethyl-2-piperidone, and the like.

As the aprotic organic polar solvent may be used, for example, tetramethyl urea, N,N'-dimethylethylene urea, N,N'-dimethylpropylene urea, 1-methyl-1-oxosulphorane, 1-ethyl-1-oxosulphorane, 1-phenyl-1-oxosulphorane, 1-methyl-1-oxophosphorane, 1-n-propyl-1-oxophosphorane, 1-phenyl-1-oxophosphorane, and the like.

Among the organic polar solvents, the aprotic organic amide compound or lactam may be conveniently used. Preferred are an N-alkyllactam and an N-alkylpyrrolidone. More preferred is N-methylpyrrolidone.

Although an amount of the organic polar solvent to be used for the process according to the present invention may be restricted to no particular range as long as the amount thereof is sufficient enough to proceed with the reaction in a homogeneous manner, the amount thereof is in the range from 0.1 to 10 times the total weight of the components (A), (B) and (C), and any other components to be added as needed. If the amount of the solvent is below the lower limit, the reaction does not proceeds to a sufficient extent. If it exceeds the upper limit, a volume efficiency is worsened thereby reducing a productivity.

To the polymerization system is added a polymerization aid, and optionally an end-capping agent such as a monohalogen aromatic compound or a compound containing one active hydrogen, a modifier for adjusting solution properties such as an alkali metal hydroxide, or a reducing agent.

As the polymerization aid is used an alkali metal carbonate, an alkali metal borate and an alkali metal chloride, bromide and iodide of an alkali metal such as lithium, sodium, potassium, rubidium, and cesium. More specifically, it includes lithium chloride, sodium chloride, potassium chloride, rubidium chloride, cesium chloride, lithium bromide, sodium bromide, cesium bromide, lithium iodide, sodium iodide, potassium iodide, cesium iodide, and the like. Preferred is lithium chloride.

The alkali metal chloride, bromide and iodide may be usually added to the organic polar solvent prior to the dehydration step if the dehydration step is employed.

The alkali metal carbonate may include, for example, lithium carbonate, sodium carbonate, potassium carbonate, rubidium carbonate and cesium carbonate. Lithium carbonate and sodium carbonate is preferred, and lithium carbonate is more preferred.

The alkali metal borate may include, for example, lithium borate, sodium borate, potassium borate, and cesium borate. Lithium and sodium borates are preferred, and lithium borate is preferred.

The polymerization aid may be used in an amount ranging usually from 0.08 to 2.0 moles, preferably from 0.5 to 1.8 moles, with respect to mole of the metallic sulfide (A). If the amount of the polymerization aid becomes below the lower limit, a polyarylene sulfide with a sufficiently high molecular weight may not be produced. If the amount thereof exceeds the upper limit, the metallic sulfide (A) becomes likely to be decomposed and the polymerization may not proceed smoothly.

As the monohalogen aromatic compound to be added to the polymerization system as needed may be enumerated, for example, chlorobenzene, bromobenzene, $\alpha$-chlorotoluene, o-chlorotoluene, m-chlocotoluene, p-chlorotoluene, $\alpha$-bromotoluene, o-bromotoluene, m-bromotoluene, and p-bromotoluene.

The active hydrogen-containing compound may include, for example, a thiophenol, phenol, and aniline. In addition thereto, for example, a compound with three or more than three reactive halogen atoms such as cyanuric chloride may be used as the branching agent or molecular weight modifier. The branching agent or molecular weight modifier may be used singly or in combination thereof.

The reducing agent may include, for example, a hydrazine, metal hydride, alkali metal formate, and sulfur. The metal hydride is preferred, as well as sodium borohydride and calcium hydride are more preferred.

The polyarylene sulfides may be prepared under the following reaction conditions. The metallic sulfide (A), dihalogen aromatic compound (B), the aromatic compound (C), and other components to be added as needed are admixed with each other in amounts within the ranges as have been described hereinabove. The resulting mixture may be then subjected to polymerization in the organic polar solvent at a temperature ranging generally from 180°C to 330 °C, preferably from 220 °C to 300 °C. If the reaction temperature is below the lower limit, a reaction velocity becomes too slow to be practically applicable. If the temperature goes above the upper limit, side reactions may occur and the resulting polymer may be degraded causing a coloration or gellation. Although a reaction time may vary with kinds and amounts of the various components, and polymerization aid, it may range generally within 20 hours, preferably from 0.1 to 8 hours.

The polycondensation may be carried out in an ambient atmosphere of an inert gas such as nitrogen, argon or carbon dioxide.

A reaction pressure is not restricted to a particular range and may be generally up to 50 kg/cm$^2$ (absolute pressure) from the self pressure of the polycondensation system such as the solvent. The polycondensation may be a one-stage reaction in which the reaction is carried out at a stationary temperature or a multiple-stage reaction in which the reaction temperature is elevated in a stepwise manner or in a continuously ascending manner.

After completion of the polymerization, the resulting polyarylene sulfide may be isolated by separating it directly from a reactor by a standard method such as filtration or centrifugal separation or by separating it from the reaction mixture after addition of a flocculating agent such as water and/or a dilute acid.

The polymer separated is then washed usually with water, methanol, acetone or the like to remove the alkali metal halide, alkali metal sulfide, polymerization aid, by-products and the like adhering to the polymer. The resulting polymer may be recovered by removing the solvent from the reaction mixture without separation therefrom and by washing the residue in the same manner as above. The solvent recovered may be reused.

As have been described hereinabove, the polyarylene sulfides prepared according to the present invention are high in a non-Newtonian behavior, high degree of branching yet not too high in an average molecular weight, and broad in a molecular weight distribution. They also have excellent moldability, flowability, and thermal stability, as well as they are not colored so that they have a high degree of whiteness. The polyarylene sulfides are further advantageous because a degree of molding flash extremely small during injection molding. For these advantageous properties, the polyarylene sulfides may be utilized and processed into various molding materials. If required, a salt content such as sodium chloride in the polymer may be reduced to a lesser extent by means of various desalting treatments, thereby resulting in molding materials suitable for electric and electronic parts, precision articles and items, films, and so on.

(Polyarylene Sulfide Resin Composition)

To the polyarylene sulfides prepared according to the invention may be added at least one member of the filler selected from the fiber filler and the powdery or granular filler.

To the polyarylene sulfide may be added components other than the polyarylene sulfide, as needed, in amounts which do not adversely affect the objects of the present invention. The other components may include, for example, a branched polyarylene sulfide, a linear polyarylene sulfide or another polymer, which has properties different from the polyarylene sulfide according to the present invention. When the other components are added, the polyarylene sulfide may be used in an amount of 50% by weight or more, preferably 70% by weight or more.

As the fiber filler or the powdery or granular filler may be conveniently used an inorganic filler.

The inorganic filler may include, for example, a carbonate such as calcium carbonate, magnesium carbonate or dolomite; a sulfate such as calcium sulfate or magnesium sulfate; a sufite such as calcium sulfite; talc; clay; mica; titania, zirconia; ferrite; asbestos; glass fibers; a silicate such as calcium silicate, montmorillonite and bentonite; a metallic powder such as iron, zinc, copper, aluminium and nickel; ceramics such as silicon carbide, silicon nitride and boron nitride; and various whiskers, carbon black, graphite, carbon fibers, metal fibers, thermally resistant organic fibers. Glass fibers, carbon fibers, and a mixture thereof with a powdery filler may be conveniently used. The inorganic filler may be used singly or in combination thereof.

The filler may have an average fiber or particle size ranging generally of 20μm or smaller and an optimum fiber or particle size may be appropriately chosen in accordance with the object of adding the filler.

In the polyarylene sulfide resin composition, the filler may be used in an amount ranging generally from 5 to 500 parts by weight, preferably from 10 to 300 parts by weight, with respect to 100 parts by weight of the polyarylene sulfide. If the amount of the filler is below the lower limit, the effects to be expected by its addition cannot be attained. If the amount of the filler exceeds the upper limit, the resulting composition cannot provide sufficient kneading properties, dispersibility, and mechanical strength.

The resin composition may additionally contain an organic filler such as wood flour, palm shell flour, cork powders, flocks or the like, as needed, in spite of or in combination with the inorganic filler. The polyarylene sulfide resin composition further may contain, for example, a stabilizer or a lubricant.

The polyarylene sulfide resin composition is suitable as molding materials for various moldings such as films and fibers, precision moldings, electric and electronic parts.

The present invention will be described by way of examples with reference to comparative examples.

Examples 1 - 8 & Comparative Examples 1 - 6 and 11:

A 10-liter autoclave was charged with 1,370 g of sodium sulfide pentahydrate, 345 g of lithium chloride (not used in Comparative Example 11), and 4,160 ml of N-methyl-2-pyrrolidone (NMP), and the mixture was heated to 200°C at a nitrogen atmosphere to remove 1,830 ml of a water-NMP mixture. The residue was cooled to 100°C , and a solution of P-dichlorobenzene (PDCB), dichloronitrobenzene (DCNB), or trichlorobenzene (TCB) in 1,500 ml of NMP was added to reach a molar ratio as indicated in Table 1 below. The mixture was reacted at 260°C for 3 hours. After the reaction mixture was cooled to room temperature, the resulting solid material was separated and washed with 4,500 ml of purified water and with acetone in order and dried in vacuo over the period of 20 hours while heating at 100°C.

The resulting polyarylene sulfides were evaluated for their inherent viscosity $[\eta_{inh}]$, Q value, molecular weight distribution, calculated viscosity $[\eta]_{calc}$, ratio of the inherent viscosity $[\eta_{inh}]$ to the calculated viscosity $[\eta]_{calc}$ (branching parameter (BI): ($[\eta_{inh}]/[\eta]_{calc}$) fluidity parameter (EI), and degree of whiteness. The results are shown in Table 1 below.

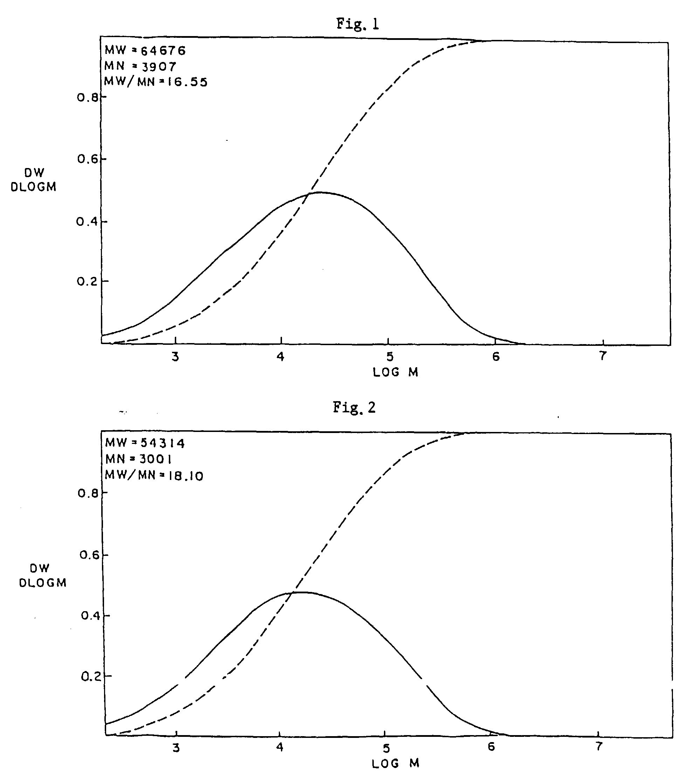

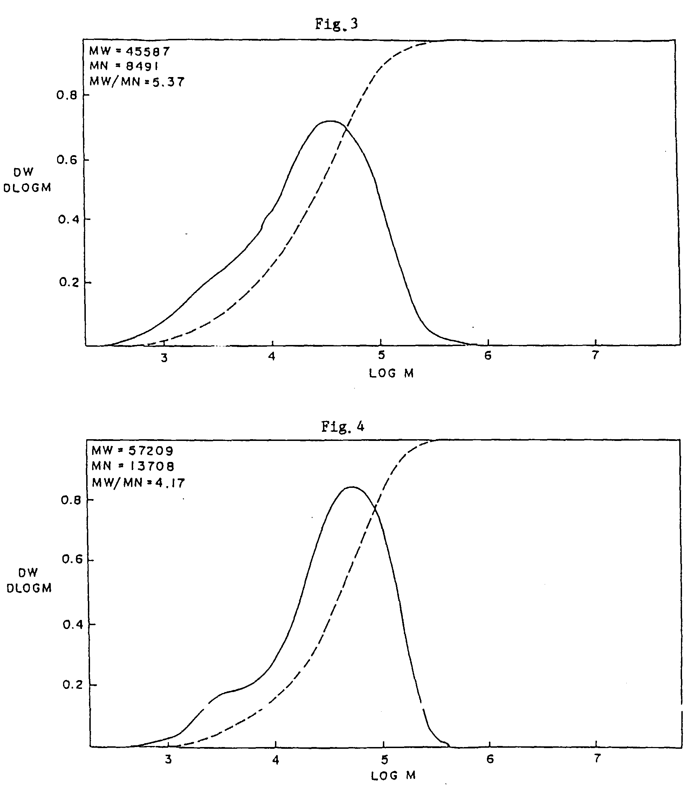

The molecular weight distributions of the polyarylene sulfides prepared in Examples 1 and 5 as well as in Comparative Examples 4 and 5 are shown in FIGS. 1 to 4, respectively.

The above evaluations were made in accordance with the following test procedures.

Q Value:
Q value is measured using a 1 mmφ × 10mm nozzle at 300 °C with the load of 50 kg.
Inherent Viscosity $[\eta_{inh}]$:

The inherent viscosity $[\eta_{inh}]$ is measured using $\alpha$-chloronaphthalene in a concentration of 0.4 g/dl at a temperature of 208 °C.

Molecular Weight Distribution:

| Device: | Gel permeation chromatography with a high temperature UV detector |
| Solvent: | $\alpha$-chloronaphthalene (Concentration: 0.2 ± 0.01 (g/dl)) |
| Separating column: | AT800P + AT80M/S x 2 (Showa Denko K.K.) |
| Column temperature: | 210 °C |
| Flow rate: | 1 ml/minute |
| Detector: | UV detector (detecting wavelength $\lambda$ =356nm) |

Quantitation of Molecular Weight:

The molecular weight is measured and calibrated from the universal calibration curve obtained by measuring a single dispersion polystyrene of a known molecular weight.

Branching Degree Parameter (BI):

The branching parameter (BI) is measured from the ratio of the inherent viscosity to calculated viscosity ($[\eta_{inh}]/[\eta]_{calc}$).

It is thus to be noted that the calculated viscosity $[\eta]_{calc}$ is calculated from GPC as follows:

$$[\eta]_{calc} = 8.91 \times 10^{-5} \cdot M^{0.747}$$

in the linear or long-chain branched group, or

$$[\eta]_{calc} = \frac{\Sigma\, 8.91 \times 10^{-5} \cdot C_i \cdot M_i^{0.747}}{\Sigma\, C_i}$$

in the group having a distribution.

Fluidity Parameter (EI):

The fluidity parameter (EI) is calculated from the formula:

$$EI = G'_{obs}/G'_1$$

where $G'_{obs}$ and $G'_1$ are each a storage modulus at an angular velocity $\omega$ =1 (rad/second), which is given by the Sinusoidal Oscillation Method at a temperature of 300°C using a cone and plate rheometer provided that $G'_1$ is a value of a linear polyarylene sulfide having the same inherent viscosity $[\eta_{inh}]$ as the specimen.

Length of molding flash:

The polyarylene sulfide was blended in the amount of 40% by weight with glass fibers ("03MA497"; Asahi Fiberglass K.K.). Test pieces (127 x 12.7 x 3.18 mm) were prepared from the composition and were injection-molded. Lengths of molding flash were microscopically observed and the results are shown in Table 1 below. It is provided, however, that, in Comparative Example 6, a blend of a non-branched polyphenylene sulfide having a different molecular weight was used to prepare a test piece which was likewise measured for lengths of molding flash upon injection molding.

As will be apparent from Table 1 below, the polyarylene sulfides prepared according to the present invention has a high non-Newtonian behavior and a high degree of branching a not, too high average molecular weight in spite of the high degree of branching and a broad molecular weight distribution. It will be apparent that the mold flashing is controlled to a remarkable extent upon injection molding.

Comparative Examples 7 - 10 and 12:

The polyphenylene sulfide was prepared using the components in the molar ratios as shown in Table 2 below in the same manner as in Example 1 with the exception that, in Comparative Example 12, lithium chloride was not employed.

The polyphenylene sulfides were measured for the inherent viscosity [$\eta_{inh}$], Q value, and length of molding flash. The results are shown in Table 2 below.

As have been described hereinabove, the polyarylene sulfides prepared according to the present invention has the inherent viscosity, weight-average molecular weight, ratio of the inherent viscosity to the calculated viscosity, and whiteness within the ranges as have been defined hereinabove, so that they are high in a non-Newtonian behavior, high degree branching not too high in an average molecular weight yet high degree in the branching , and broad in a molecular weight distribution. They are superior in moldability, fluidity,and thermal stability, and they are not so colored that a degree of whiteness is high. Furthermore, molding flash are unlikely to occur upon injection molding. The polyarylene sulfides prepared according to the present invention are industrially useful due to the various advantages because they can be prepared with ease merely by controlling the polymerization system.

The process according to the present invention presents the advantage that the polyarylene sulfides with the advantageous properties can be prepared with stability.

The polyarylene sulfide resin composition has a mechanical strength, resistance to heat, long-term stability and chemical resistance superior to the polyarylene sulfides.

## TABLE 1

| | PDCB/Na₂S | DCNB/Na₂S | TCB/Na₂S | η inh | Q value (10⁻²mℓ/s) | M. W. Distribution (Weight-Average M.W.) | | | [η] calc | *1 BI | *2 EI | Degree of Whiteness | | Length of Molding Flash (μm) |
|---|---|---|---|---|---|---|---|---|---|---|---|---|---|---|
| | | | | | | <2x10³ (wt%) | >2x10⁵ (wt%) | Average M.W. (x10⁴) | | | | Granular Polymer | Molded Product | |
| Ex. 1 | 1.05 | 0.008 | — | 0.24 | 0.13 | 11.4 | 6.7 | 6.4 | 0.35 | 0.68 | 1.25 | 88 | 75 | 160 |
| Ex. 2 | 1.05 | — | 0.008 | 0.25 | 0.09 | 9.8 | 7.2 | 7.5 | 0.33 | 0.76 | 1.23 | 89 | 76 | 120 |
| Ex. 3 | 1.05 | 0.015 | — | 0.28 | 0.06 | 7.0 | 10.0 | 8.0 | 0.42 | 0.67 | 1.30 | 88 | 75 | 110 |
| Ex. 4 | 1.05 | — | 0.015 | 0.27 | 0.07 | 7.2 | 9.5 | 8.8 | 0.44 | 0.61 | 1.43 | 87 | 76 | 110 |
| Ex. 5 | 1.10 | 0.015 | — | 0.21 | 0.41 | 14.7 | 5.8 | 5.4 | 0.31 | 0.68 | 1.25 | 88 | 77 | 290 |
| Ex. 6 | 1.10 | — | 0.015 | 0.22 | 0.36 | 12.5 | 6.2 | 6.5 | 0.36 | 0.61 | 1.45 | 87 | 77 | 320 |
| Ex. 7 | 1.20 | 0.030 | — | 0.21 | 0.43 | 13.5 | 6.0 | 6.0 | 0.32 | 0.65 | 1.35 | 87 | 78 | 90 |
| Ex. 8 | 1.20 | 0.050 | — | 0.23 | 0.44 | 14.8 | 8.5 | 6.6 | 0.37 | 0.62 | 1.45 | 86 | 79 | 50 |
| Com. Ex.11 | 1.05 | 0.008 | — | 0.20 | 0.49 | 15.7 | 5.3 | 4.4 | 0.29 | 0.57 | 1.36 | 87 | 76 | 220 |
| Com. Ex.1 | 1.00 | — | — | 0.26 | 0.08 | 9.4 | 0.6 | 4.5 | 0.26 | 1.0 | 1.0 | 87 | 76 | 940 |
| Com. Ex.2 | 1.05 | — | — | 0.12 | 0.90 | 16.0 | 0.0 | 2.1 | 0.12 | 1.0 | 1.0 | 86 | 78 | — |
| Com. Ex.3 | 1.00 | 0.003 | — | 0.37 | 0.009 | 8.0 | 4.0 | 7.8 | 0.44 | 0.85 | 1.1 | 86 | 77 | 700 |
| Com. Ex.4 | 1.00 | 0.001 | — | 0.28 | 0.060 | 2.5 | 3.1 | 4.6 | 0.29 | 0.97 | 1.0 | 88 | 77 | 820 |
| Com. Ex.5 | 1.00 | — | — | 0.33 | 0.017 | 2.5 | 2.5 | 5.7 | 0.34 | 0.97 | 1.0 | 89 | 78 | 750 |
| Com A80% | 1.00 | — | — | 0.26 | 0.15 | 9.4 | 0.6 | 4.5 | 0.26 | — | — | 86 | 74 | 850 |
| Ex6 B20% | 1.05 | — | — | 0.12 | | 16.0 | 0.0 | 2.1 | 0.12 | | | | | |

Note: Molded item obtained from commercially available polyarylene sulfide (thermally cross-linked type:
"RYTON R-4"; Phillips Petroleum): Degree of whiteness, 22

*1) BI: Branching parameter: $[\eta]_{inh}/[\eta]_{calc}$

*2) EI: Fluidity parameter: $G'_{obs}/G'_1$

TABLE 2

| | PDCB/Na$_2$S | DCNB/PDCB | $\eta_{inh}$ | Q Value ($10^{-2}$m$\ell$/s) | Length of molding Flash ($\mu$m) |
|---|---|---|---|---|---|
| Com. Ex. 12 | 1.050 | 0.008 | 0.20 | 0.49 | 220 |
| Com. Ex. 7 | 1.000 | 0.003 | 0.21 | 0.38 | 750 |
| Com. Ex. 8 | 1.030 | - | 0.20 | 0.43 | 700 |
| Com. Ex. 9 | 1.030 | 0.001 | 0.22 | 0.42 | 650 |
| Com. Ex.10 | 1.000 | 0.007 | Gelled | Not flowed | - |

## Claims

1. A process for preparing a poylarylene sulfide having

an inherent viscosity [$\eta_{inh}$] of 0.1 to 0.5 dl/g;
a weight-average molecular weight of 1 x 10$^4$ to 2 x 10$^5$;
a ratio of the inherent viscosity [$\eta_{inh}$] to a calculated viscosity [$\eta$]$_{calc}$ ([$\eta_{inh}$]/[$\eta$]$_{Calc}$) of 0.4/1 to 0.8/1; and
a degree of whiteness of 50 or higher when measured in accordance with whiteness testing procedures (JIS P8123);

comprising:
reacting at least one member of a metallic sulfide (A) selected from an alkali metal sulfide and an alkali metal hydrosulfide with a dihalogen aromatic compound (B) and an aromatic compound (C) having three or more than three functional groups in a polar solvent in a molar ratio of the dihalogen aromatic compound (B) to the metallic sulfide (A) [(B)/(A)] ranging from 1.050/1 to 1.300/1 and in a molar ratio of the aromatic compound (C) to the dihalogen aromatic compound (B) [(C)/(B)] ranging from 0.0076/1 to 0.05/1, in the presence of a polymerization aid selected from the group consisting of an alkali metal carbonate, an alkali metal borate, an alkali metal chloride, an alkali metal bromide and an alkali metal iodide.

2. The process as claimed in claim 1, wherein:

the metallic sulfide (A) is sodium sulfide;
the dihalogen aromatic compound (B) is a dihalobenzene; and
the aromatic compound (C) is a dihalonitrobenzene and/or a trihalobenzene.

3. The process as claimed in claim 2, wherein:

the polar solvent is an N-alkylpyrrolidone; and
the dihalobenzene is p-dichlorobenzene or p-dichlorobenzene containing 20 mol% or less of m-dichlorobenzene.

4. The process as claimed in claim 1, wherein the polymerization aid is lithium chloride.

## Patentansprüche

1. Verfahren zur Herstellung eines Polyarylensulfids, das

eine inhärente Viskosität [$\eta_{inh}$] von 0,1 bis 0,5 dl/g;
ein gewichtsmittleres Molekulargewicht von 1 x 10$^4$ bis 2 x 10$^5$;
ein Verhältnis der inhärenten Viskosität [$\eta_{inh}$] zu einer berechneten Viskosität [$\eta$]$_{calc}$ ([$\eta_{inh}$]/[$\eta$]$_{Caic}$) von 0.4/1 bis 0,8/1: und
einen Weißheitsgrad von 50 oder mehr, gemessen gemäß Weißheits-Testverfahren (JIS P8123), aufweist;

umfassend:
Umsetzen mindestens eines Vertreters eines metallischen Sulfids (A), gewählt aus einem Alkalimetallsulfid und einem Alkalimetallhydrosulfid, mit einer aromatischen Dihalogenverbindung (B) und einer aromatischen Verbindung (C) mit drei oder mehr als drei funktionellen Gruppen in einem polaren Lösungsmittel in einem Molverhältnis der aromatischen Dihalogenverbindung (B) zu dem metallischen Sulfid (A) [(B)/(A)] im Bereich von 1,050/1 bis 1.300/1 und in einem Molverhältnis der aromatischen Verbindung (C) zu der aromatischen Dihalogenverbindung (B) [(C)/(B)] im Bereich von 0.0076/1 bis 0.05/1, in Gegenwart einer Polymerisationshilfe, gewählt aus der Gruppe, bestehend aus einem Alkalimetallcarbonat, einem Alkalimetallborat, einem Alkalimetallchlorid, einem Alkalimetallbromid und einem Alkalimetalliodid.

2. Verfahren nach Anspruch 1, wobei

das metallische Sulfid (A) Natriumsulfid ist;
die aromatische Dihalogenverbindung (B) ein Dihalogenbezol ist: und
die aromatische Verbindung (C) ein Dihalogennitrobenzol und/oder ein Trihalogenbenzol ist.

3. Verfahren nach Anspruch 2, wobei

das polare Lösungsmittel ein N-Alkylpyrrolidon ist; und
das Dihalogenbenzol p-Dichlorbenzol oder p-Dichchlorbenzol, das 20 Mol-% oder weniger m-Dichlorbenzol enthält, ist.

4. Verfahren nach Anspruch 1, wobei die Polymerisationshilfe Lithiumchlorid ist.

**Revendications**

1. Procédé pour la préparation d'un poly(sulfure d'arylène) présentant

une viscosité inhérente [$\eta_{inh}$] de 0,1 à 0,5 dl/g;
une masse moléculaire moyenne en poids de 1 x 10$^4$ à 2 x 10$^5$;
un rapport de la viscosité inhérente [$\eta_{inh}$] à la viscosité calculée [$\eta$]$_{calc}$ ([$\eta$]$_{inh}$/[$\eta$]$_{calc}$) de 0,4/1 à 0,8/1; et
un indice de blancheur de 50 ou plus tel que mesuré d'après le protocole de mesure de l'indice de blancheur (JIS P8123);
comprenant :
la réaction d'au moins un sulfure métallique (A) choisi parmi un sulfure de métal alcalin et un hydrogénosulfure de métal alcalin avec un composé aromatique dihalogéné (B) et un composé aromatique (C) présentant au moins trois groupes fonctionnels dans un solvant polaire et dans un rapport molaire du composé aromatique dihalogéné (B) au sulfure métallique (A) [(B)/(A)] compris entre 1,050/1 et 1,300/1 et dans un rapport molaire du composé aromatique (C) au composé aromatique dihalogéné (B) [(C)/(B)] compris entre 0,0076/1 et 0,05/1, en présence d'un agent favorisant la polymérisation choisi dans le groupe constitué d'un carbonate de métal alcalin, d'un borate de métal alcalin, d'un chlorure de métal alcalin, d'un bromure de métal alcalin et d'un iodure de métal alcalin.

2. Procédé selon la revendication 1, dans lequel :

le sulfure métallique (A) est le sulfure de sodium;
le composé aromatique dihalogéné (B) est un dihalogénobenzène; et
le composé aromatique (C) est un dihalogénonitrobenzène et/ou un trihalogénobenzène.

3. Procédé selon la revendication 2, dans lequel :

le solvant polaire est une N-alkylpyrrolidone; et
le dihalogénobenzène est le para-dichlorobenzène ou du para-dichlorobenzène contenant 20 % en mole ou moins de métadichlorobenzène.

4. Procédé selon la revendication 1, dans lequel l'agent favorisant la polymérisation est le chlorure de lithium.

Fig. 1

Fig. 2

Fig. 3

MW = 45587
MN = 8491
MW/MN = 5.37

DW
DLOGM

LOG M

Fig. 4

MW = 57209
MN = 13708
MW/MN = 4.17

DW
DLOGM

LOG M